Europäisches Patentamt

European Patent Office

Office européen des brevets

(11) Veröffentlichungsnummer: **0 083 798**

**A1**

## (12) EUROPÄISCHE PATENTANMELDUNG

(21) Anmeldenummer: 82112047.4

(22) Anmeldetag: 28.12.82

(51) Int. Cl.³: **E 05 B 71/00**
**B 62 H 5/14**

(30) Priorität: 07.01.82 DE 3200173

(43) Veröffentlichungstag der Anmeldung:
20.07.83 Patentblatt 83/29

(84) Benannte Vertragsstaaten:
BE DE NL SE

(71) Anmelder: Raukamp GmbH & CO KG
Uhlandstrasse 31
D-5620 Velbert 1(DE)

(72) Erfinder: Schwarz, Artur
Grüne Harfe 10
D-4300 Essen 16(DE)

(74) Vertreter: Weisse, Jürgen, Dipl.-Phys. et al,
Bökenbusch 41 Postfach 11 03 86
D-5620 Velbert 11-Langenberg(DE)

(54) Bügelschloss für Zweiradfahrzeuge.

(57) Ein Bügelschloß für Zweiradfahrzeuge besteht aus einem kreisbogenförmigen Verschlußbügel (1), der in einem kreisbogenförmigen Bügelrohr (5) verschieblich ist und in der unter Einwirkung einer Rückholfeder (7) eingenommenen zurückgezogenen Stellung eine Schließöffnung (9) freigibt. Der Verschlußbügel (1) wird gegen die Rückholfeder (7) in das Bügelrohr (5) eingeführt und in der geschlossenen Stellung durch ein Zylinderschloß (11) mit Schloßkern (16) und mit Stift- (22) und Plättchenzuhaltungen gehalten, das in einen Lamellenblock (10) oder einen Rohrkörper eingeschlossen ist, der von dem Bügelrohr (5) durchsetzt wird. Ein mit dem inneren Ende des Schloßkerns (16) in Wirkverbindung stehendes Eingriffselement in Form einer Kugel (20) oder eines Riegels greift in der Schließstellung durch einen Durchbruch im Bügelrohr (5) in eine Rastnut am Umfang des Verschlußbügels (1).

0083798

Patentanmeldung


Raukamp GmbH & Co. KG., Uhlandstr. 31, D-5620 Velbert 1


# Bügelschloß für Zweiradfahrzeuge


Die Erfindung betrifft ein Bügelschloß für Zweiradfahrzeuge, bestehend aus einem kreisbogenförmigen Verschlußbügel aus gehärtetem Stahl mit einem Handgriff, aus einem kreisbogenförmigen Kanal mit einer Schließöffnung zwischen seinen Enden, in dem der Verschlußbügel gegen die Kraft einer Feder aus einer die Schließöffnung schließenden ersten Stellung in eine die Schließöffnung freigebende zweite Stellung verschiebbar ist, aus einem seitlich von dem Kanal vorstehenden Gehäuse und aus einem in dem Gehäuse angeordneten Schloß mit einem gegen den Verschlußbügel verstellbaren Eingriffselement, das zum Eingriff mit einer komplementär dazu ausgebildeten Rastnut am Umfang des Verschlußbügels eingerichtet ist, wobei in Schließstellung des Schlosses der Verschlußbügel in seiner ersten Stellung und das Eingriffselement im Eingriff mit der Rastnut und in geöffneter Stellung des Schlosses der Verschlußbügel in seiner zweiten Stellung und das Eingriffselement außer Eingriff mit der Rastnut ist.

Bei einem bekannten Bügelschloß dieser Art (DE-GM 80 04 739) ist der Verschlußbügel in einem Kanal geführt, der zwischen einer Grundplatte und einer Abdeckplatte gebildet ist, die durch Umbördeln unter Zwischenlage einer Panzerplatte aus gehärtetem Stahl miteinander verbunden sind. Der Handgriff des Verschlußbügels ist in einem Schlitz an der Oberseite der Abdeckplatte geführt. Die Grundplatte und die Abdeckplatte haben einen U-förmigen Ausschnitt, der eine Schließöffnung bestimmt, die in geschlossener Stellung von dem Verschlußbügel überbrückt wird. Seitliche Ansätze der Grundplatte und der Abdeckplatte bilden ein Gehäuse zur Aufnahme eines Schlosses, mit dem ein radial in bezug auf den Verschlußbügel verlaufender Riegel verschiebbar ist. In geschlossenem Zustand, in dem der Verschlußbügel die Schließöffnung überbrückt, befindet sich der Riegel im Eingriff mit einem eine Rastnut bildenden Schlitz am Umfang des Verschlußbügels.

Das bekannte Bügelschloß ist in der Herstellung aufwendig, da das Gehäuse und das Schloß in einer Reihe von Arbeitsgängen hergestellt und zusammengesetzt werden müssen. Außerdem stellt trotz der Einlage einer Panzerplatte das flach ausgebildete Gehäuse mit dem Schloss einen Angriffspunkt für Schneidwerkzeuge wie Bolzenschneider u.dgl. dar.

Die Aufgabe der Erfindung besteht darin, ein Bügelschloß in der eingangs genannten Art zu schaffen, das aus verhältnismäßig wenigen, einfach aufgebauten Komponenten in einer möglichst geringen Zahl einfachster Arbeitsvorgänge zusammengesetzt werden kann und
eine höhere Sicherheit gegen Aufbrechen bietet.

Erfindungsgemäß wird diese Aufgabe dadurch gelöst, daß
der Kanal von einem Bügelrohr aus gehärtetem Stahl gebildet ist, das das Gehäuse durchsetzt, und daß das
Bügelrohr innerhalb des Gehäuses einen Durchbruch aufweist und das Schloß in dem Gehäuse mit dem Eingriffselement in Ausrichtung zu dem Durchbruch angeordnet
ist.

Das erfindungsgemäße Bügelschloß besteht praktisch nur
aus dem Bügelrohr, in dem der Verschlußbügel verschiebbar ist, und aus einem von dem Bügelrohr durchsetzten
Gehäuse, in das das Schloß, vorzugsweise ein Zylinderschloß mit Schloßkern und Stift- und Plättchenzuhaltungen, eingeschlossen ist. Diese Komponenten können
auf einfachste Weise durch Verschweißen oder Verzapften
unlösbar miteinander verbunden werden und sind so ausgebildet, daß sie für sich mit den üblichen dafür benutzten Werkzeugen nicht bzw. nur unter großer Schwierigkeiten angreifbar sind. Beispielsweise hat das aus gehärtetem Stahl bestehende Bügelrohr einen Außendurchmesser, der größer ist als die Schneidöffnung der
Klauen eines Bolzenschneiders, so daß keine Angriffsfläche für Werkzeuge dieser Art vorhanden ist. Auch
das einen Lamellenblock oder einen Rohrkörper bildende
Gehäuse für das Zylinderschloß bietet für sich und in
seiner Verbindung mit dem Bügelrohr keine Angriffspunkte, an dem das Bügelschloß mit üblichen Werkzeugen
aufgebrochen werden könnte.

Vorteilhafte Ausgestaltungen und Weiterbildungen des
erfindungsgemäßen Bügelschlosses sind in Unteransprüche
gekennzeichnet.

Ausführungsbeispiele der Erfindung sind in den Abbildungen dargestellt und werden nachfolgend anhand der Bezugszeichen im einzelnen erläutert und beschrieben. Es zeigen

Fig. 1a eine Seitenansicht eines ersten Ausführungsbeispiels des erfindungsgemäßen Bügelschlosses;

Fig. 1b eine teilweise geschnittene Draufsicht auf das Bügelschloß nach Fig. 1a in Schließstellung;

Fig. 1c Schnittansichten der Schloßhülse und des Schloßkerns eines Zylinderschlosses für das Bügelschloss nach Fig. 1a;

Fig. 2a eine Seitenansicht eines zweiten Ausführungsbeispiels des erfindungsgemäßen Bügelschlosses;

Fig. 2b eine teilweise geschnittene Draufsicht auf das Bügelschloß nach Fig. 2a in Schließstellung;

Fig. 2c eine teilweise geschnittene Draufsicht auf das Bügelschloss nach Fig. 2a in geöffneter Stellung;

Fig. 3a einen Teilschnitt eines dritten Ausführungsbeispiels des erfindungsgemäßen Bügelschlosses in Schließstellung;

Fig. 3b einen Teilschnitt des Bügelschlosses nach Fig. 3a in geöffneter Stellung; und

Fig. 3c     einen Schnitt entlang der der Linie C-C

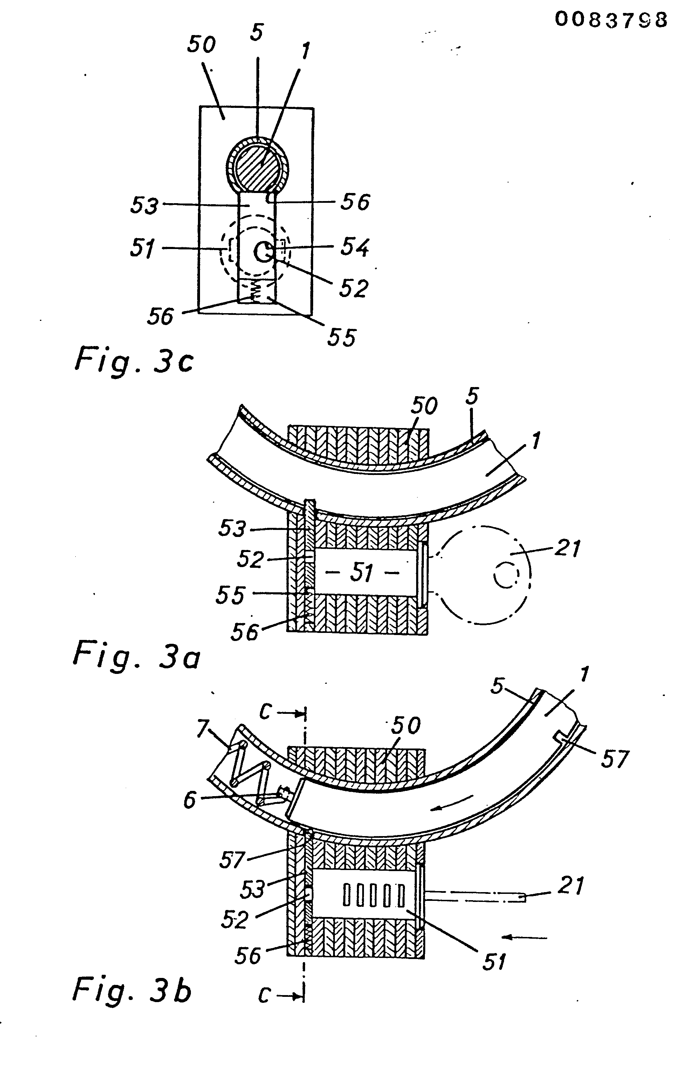

            in Fig. 3b.

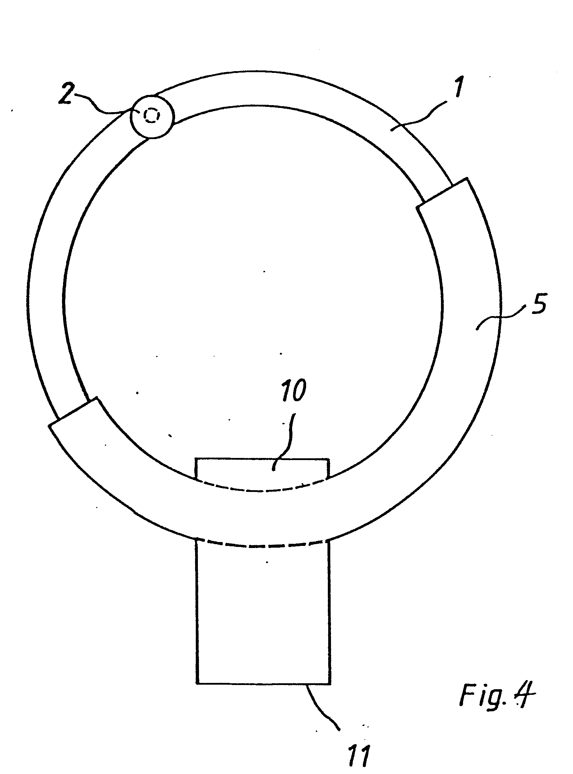

Fig. 4      eine schematische Draufsicht auf ein
            Bügelschloß und

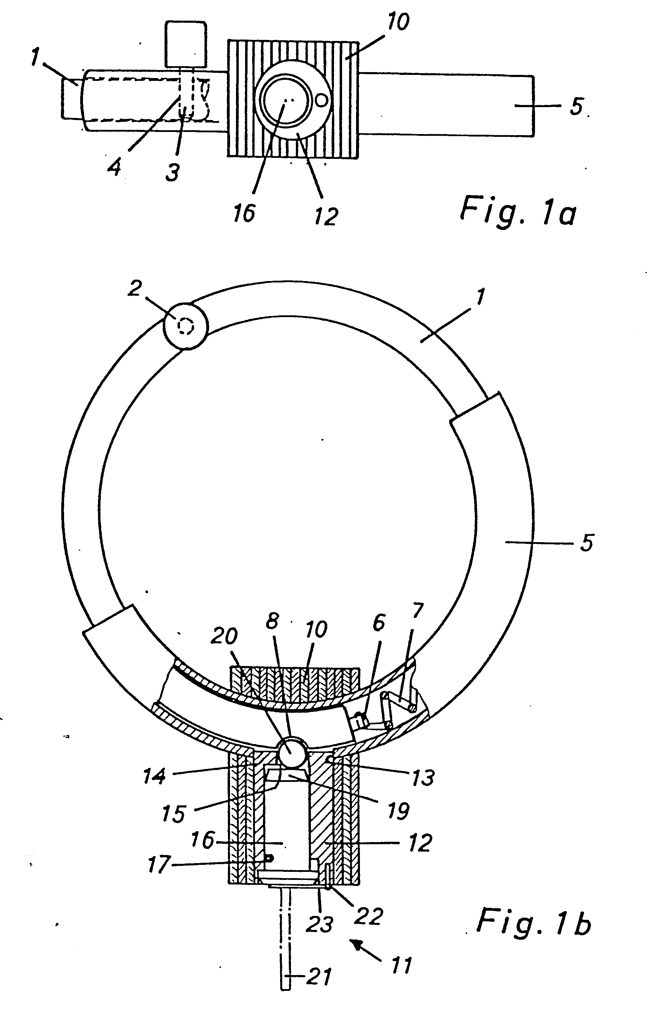

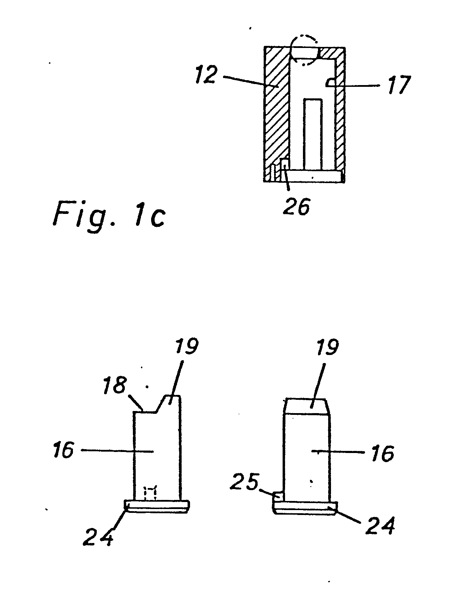

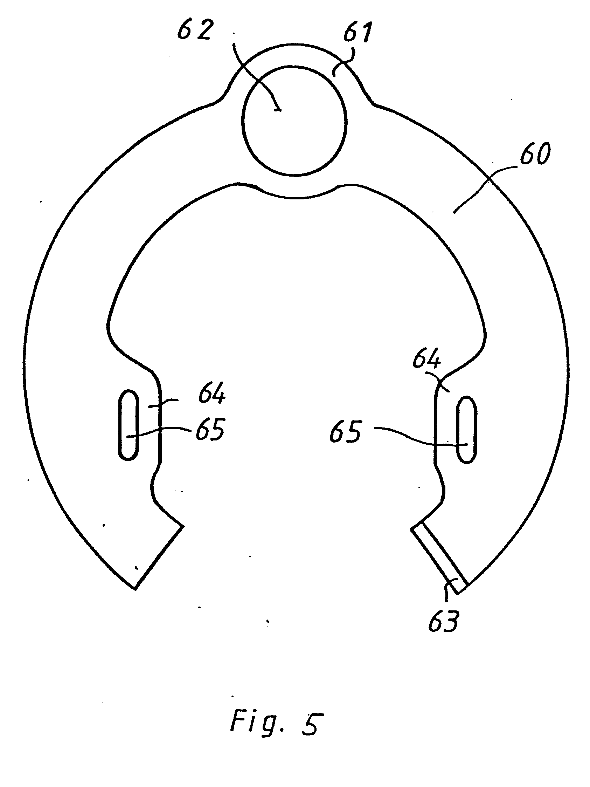

Fig. 5      eine Draufsicht auf eine erfindungsgemäße Stahlplatte zur Verbindung mit
            dem Bügelschloß nach Fig. 1.

Das in Fig. 1a-c dargestellte Bügelschloß besteht aus
einem Verschlußbügel 1 aus gehärtetem Stahl mit einem
Handgriff 2, der mit einem Stift 3 in eine Bohrung 4
des Verschlußbügels 1 eingepaßt ist, und aus einem
halbkreisförmigen Bügelrohr 5, dessen Innendurchmesser
so an den Durchmesser des Verschlußbügels 1 angepaßt
ist, daß dieser darin gleitbeweglich ist. Das in Fig. 1b
erkennbare innere Ende des Verschlußbügels 1 trägt einen
Zapfen 6, an dem ein Ende einer Rückholfeder 7 befestigt
ist, deren anderes (nicht sichtbares) Ende im Inneren
des Bügelrohrs 5 verankert ist. Der Verschlußbügel 1 ist
an einer Stelle seines Umfangs mit einer Rastnut 8 versehen (s.w.u.) deren Profil einen Teil einer Kugelfläche bildet.

An dem Bügelrohr 5 ist außermittig ein Gehäuse in Form
eines Lamellenblocks 10 angeschweißt; der Lamellenblock 10 und das Bügelrohr 5 können auch durch Verzapfen
fest miteinander verbunden werden. Das Bügelrohr 5
durchsetzt den Lamellenblock 10, der aus Stapelblechen
aus Stahl von 2,5 mm Stärke besteht, die mit an den
Außendurchmesser des Bügelrohrs 5 und dessen Verlauf
durch den Lamellenblock 10 angepaßten Löchern versehen
sind und versenkt vernietet sind. In dem Lamellenblock
10 ist ein Zylinderschloß 11 so eingesetzt, daß es bis
auf die Schlüsselöffnung in den Lamellenblock 10 eingeschlossen ist und radial in bezug auf das Bügelrohr 5 zu dessen Außenumfang verläuft. Eine Schloßhülse 12 ist verdrehungssicher in den Lamellenblock 10 eingesetzt und endet in einem Durchbruch 13 am Außenumfang des Bügelrohres 5; die nach außen offene Schloßhülse 12 hat ein Bodenteil 14 mit einer Öffnung 15, die sich in Richtung auf das Bügelrohr 5 verjüngt. Der Schloßkern 16 ist fluchtend in eine exzentrische Bohrung 17 der Schloßhülse eingesetzt und endet in einem gewissen Abstand vom Bodenteil 14 der Schloßhülse 12. Das dem Bodenteil 14 zugekehrte innere Ende des Schloßkerns 16 ist mit einer unsymmetrischen Ausnehmung 18 und einer vorstehenden Nase 19 versehen (vgl. Fig. 1c). Zwischen diesem Ende des Schloßkerns 16 und dem Bodenteil 14 befindet sich ein Eingriffselement in Form einer Kugel 20, an deren Durchmesser die Öffnung 15 und die Ausnehmung 18 angepaßt sind; dabei ist der Durchmesser des verjüngten Endes der Öffnung 15 kleiner als der Durchmesser der Kugel 20. Am anderen Ende ist ein Schlüssel 21 in den Schlosskern 16 eingeführt. Ein Stift 22 ist in die Stirnseite der Schloßhülse 12 eingesetzt, und daran ist eine an dem Stift 22 schwenkbare Schutzklappe 23 zum Abdecken der Schlüsselöffnung angelenkt. Von einem Ringflansch 24 am äußeren Ende des Schloßkerns 16 steht eine Nase 25 in eine Ausnehmung 26 vor, die sich über einen Winkel von 90$^\circ$ an der Innenwandung der Schloßhülse 12 erstreckt und den Drehwinkel des Schloßkerns 16 in der Schloßhülse 12 bestimmt.

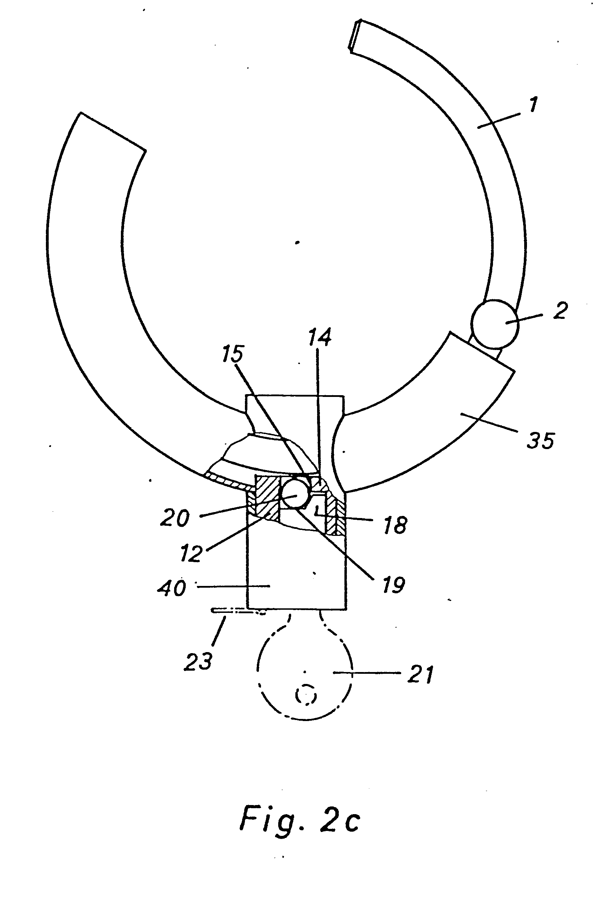

Das Bügelschloß ist in Fig. 1a,b, in geschlossener Stellung gezeigt. In dieser Stellung ist der Verschlußbügel 1 mittels des Handgriffs 2 gegen die Kraft der Rückholfeder soweit in dem Bügelrohr 5 verschoben, daß das freie Ende des Verschlußbügels 1 in das Bügelrohr 5 eingeführt ist, wodurch die von diesem Ende und dem zugehörigen Ende des Bügelrohrs 5 bestimmte Schließöffnung 9 (vgl. Fig. 2c) abgeschlossen wird. Durch Verdrehung des Schloßkerns 16 mittels des Schlüssels 21 greift die Nase 19 an der Kugel 20 an, so daß diese durch die Öffnung 15 hindurch in das Innere des Bügelrohrs 5 vorsteht und mit der Rastnut 8 an dem Verschlußbügel 1 in Eingriff ist. Zum Öffnen des Bügelschlosses wird der Schloßkern 16 mit dem eingesteckten Schlüssel 21 in der Schloßhülse 12 um $90^{\circ}$ verdreht. Dadurch wird die Ausnehmung 18 zu der Öffnung 15 ausgerichtet (vgl. Fig. 2c), so daß der Verschlußbügel 1 unter der Wirkung der Rückholfeder 7 die Kugel 20 aus der Rastnut 8 verdrängt und die Schließöffnung 9 freigibt.

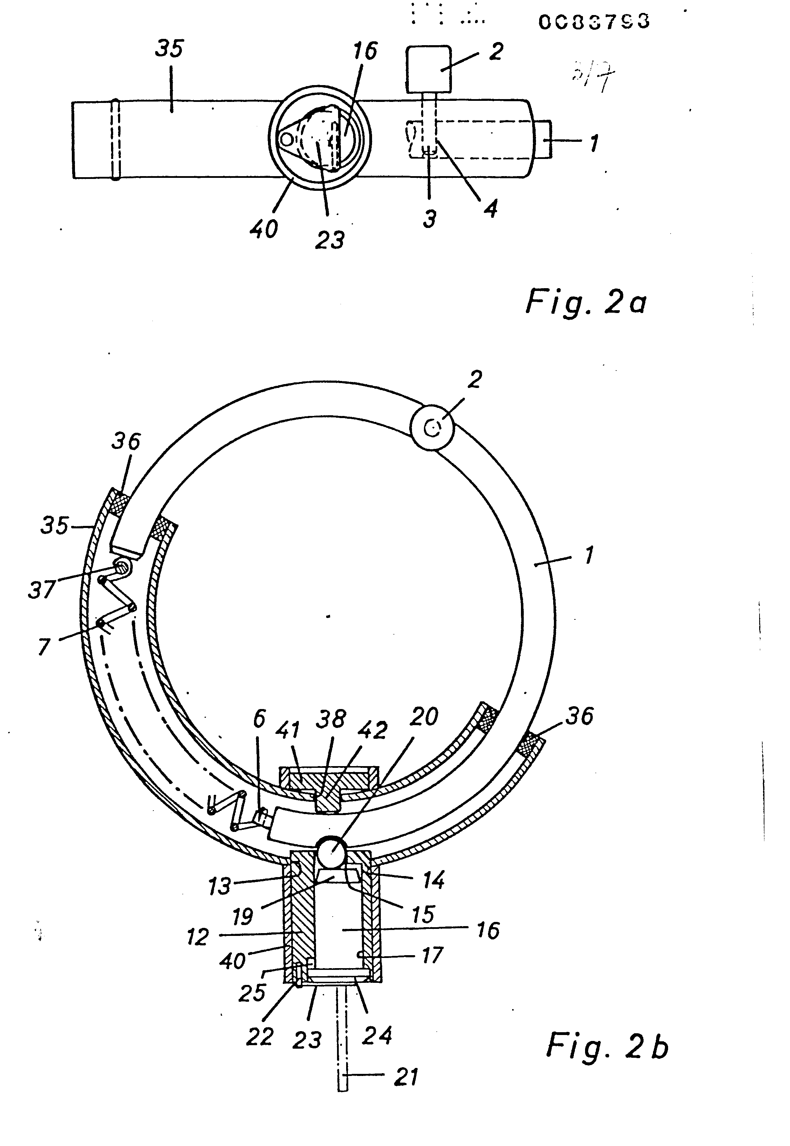

Das in Fig. 2a-c dargestellte zweite Ausführungsbeispiel des Bügelschlosses unterscheidet sich von dem vorstehend beschriebenen Bügelschloß im wesentlichen hinsichtlich des Bügelrohres und des Gehäuses. In der nachfolgenden Beschreibung sind die Teile, die mit den entsprechenden Teilen des in Fig. 1a-c dargestellten Bügelschlosses identisch sind, mit den gleichen Bezugszeichen versehen.

Das Bügelrohr 35 hat einen deutlich größeren Innendurchmesser als dem Durchmesser des Verschlußbügels 1 entspricht. In die offenen Enden des Bügelrohrs 35 sind Führungs- und Dichtelemente 36 aus Stahl oder Kunststoff eingesetzt, in denen der Verschlußbügel 1 geführt ist. Man erkennt auch die Verankerung 37 für die Rückholfeder 7. Das Bügelrohr 35 ist an seiner inneren Umfangsseite gegenüber von dem Durchbruch 13 mit einem weiteren Durchbruch 38 versehen. Das Gehäuse für das Schloß bildet bei dieser Ausführung des Bügelschlosses einen einseitig geschlossenen Rohrkörper 40, dessen geschlossenes Ende aus einer Bodenplatte 41 mit einem Zapfen 42 gebildet ist, der in das Innere des Rohrkörpers 40 und durch den Durchbruch 38 in das Innere

— 9 —

des Bügelrohres 35 vorsteht. Der Zapfen 42 ist an den Durchmesser des Durchbruchs 38 angepaßt. Alle übrigen Teile des in Fig. 2a-c gezeigten Bügelschlosses sind wie die entsprechenden Teile des in Fig. 1a-c dargestellten Bügelschlosses aufgebaut; zu ihrer Beschreibung wird auf die Beschreibung des Ausführungsbeispiels nach Fig. 1a-c verwiesen.

Das in Fig. 2b in geschlossener Stellung gezeigte Bügelschloß nimmt bei Verdrehung des Schloßkerns 16 mit dem eingestellten Schlüssel 21 in der Schloßhülse 12 um 90° die in Fig. 2c dargestellte geöffnete Stellung ein. Man erkennt darin die zwischen dem freien Ende des Verschlußbügels 1 und dem einen Ende des Bügelrohres 35 bestimmte Schließöffnung 9 und die Lage der Kugel 20, die durch den Verschlußbügel 1 in die Öffnung 15 zurückgedrängt wird und in der Ausnehmung 18 am inneren Ende des Schloßkerns 16 aufgenommen ist.

Das in Fig. 3a-c dargestellte Ausführungsbeispiel des Bügelschlosses unterscheidet sich von dem Bügelschloß nach Fig. 1a-c im wesentlichen nur durch die Anordnung des Zylinderschlosses. Alle übrigen Teile sind wie bei dem Ausführungsbeispiel nach Fig. 1a-c ausgebildet und mit den gleichen Bezugszeichen versehen. Das Bügelrohr 5 kann aber auch bei dieser Ausführung durch das weitere Bügelrohr 35 nach Fig. 2a-c ersetzt werden.

Der Verschlußbügel 1 und das Bügelrohr 5 sind im wesentlichen wie in Fig. 1a,b ausgebildet, und wie dort ist an dem Bügelrohr 5 ein Lamellenblock 50 befestigt, der wie dort aus Stapelblechen zusammengesetzt ist. In den Lamellenblock 50, dessen Stapelbleche mit entsprechenden Bohrungen versehen sind, ist ein Zylinderschloß so eingesetzt, daß es bis auf die Schlüsselöffnung in den Lamellenblock 50 eingeschlossen ist. Es ist nur der Schloßkern 51 in den Lamellenblock 50 eingesetzt, und zwar in tangentialer Ausrichtung zum Außenumfang des Bügelrohrs 5. Das innere Ende des Schloßkerns 51 ist exzentrisch mit einem Zapfen 52 versehen, der gegen ein Eingriffselement in Form eines Riegels 53 vorsteht und in einen darin exzentrisch ausgebildeten Durchbruch 54 greift (Fig. 3c). Der Riegel 53 bildet eine rechteckförmige Platte, die in einem entsprechenden Hohlraum 55 des Lamellenblocks 50 gleitbeweglich und durch eine Feder 56 an dem dem Bügelrohr 5 abgewandten Ende in Richtung auf das Bügelrohr 5 vorgespannt ist. Zu dem Hohlraum 55 in dem Lamellenblock 50 ist ein Durchbruch 57 in dem Bügelrohr ausgerichtet; eine Rastnut 58 am Umfang des Verschlußbügels 1 hat die Form eines zu dem Riegel 53 ausgerichteten und an dessen Stärke angepaßten Einschnitts.

Die Wirkungsweise des in Fig. 3a-c beschriebenen Bügelschlosses unterscheidet sich von der Wirkungsweise der vorstehend beschriebenen Bügelschlösser im wesentlichen nur durch die Anordnung des Schloßkerns 51 in dem Gehäuse. Bei Verdrehung des Schloßkerns 51 mit dem eingesteckten Schlüssel 21 aus der in Fig. 3a gezeigten Schließstellung in die in Fig. 3b gezeigte geöffnete Stellung wird der Riegel 53 unter Einwirkung des Zapfens 52 gegen die Kraft der Feder 56 aus dem Einschnitt in dem Verschlußbügel 1 und durch den Durchbruch 57 in den Hohlraum 55 zurückgezogen, so daß der Verschlußbügel 1 unter der Wirkung der Rückholfeder 7 in das Bügelrohr 5 zurückgezogen wird und die Schließöffnung 9 freigibt.

Die vorstehend beschriebenen Bügelschlösser können auf einfache Weise an den Zweiradfahrzeugen befestigt werden, beispielsweise durch Laschen, von denen eine zu dem die Hinterradgabeln eines Fahrrades verbindenden Verbindungsglied und die andere zu einer der Hinterradgabeln führt.

Das in Figur 4 dargestellte Bügelschloß besteht aus
einem Verschlußbügel 1 aus gehärtetem Stahl mit einem
Handgriff 2, der mit einem Stift in eine Bohrung des
Verschlußbügels 1 eingepaßt ist, und aus einem halbkreisförmigen Bügelrohr 5, dessen Innendurchmesser
so an den Durchmesser des Verschlußbügels 1 angepaßt
ist, daß dieser darin gleitbeweglich ist. Das innere
Ende des Verschlußbügels 1 ist mit einem Ende einer
Rückholfeder verbunden, deren anderes Ende im Inneren
des Bügelrohres 5 verankert ist. Der Verschlußbügel 1
ist an einer Stelle seines Umfangs mit einer Rastnut
versehen, die zum Eingriff mit einem Eingriffselement
eines Zylinderschlosses 11 ausgestaltet ist.

An dem Bügelrohr 5 ist außermittig ein Gehäuse in Form
eines Lamellenblocks 10 angeschweißt; der Lamellenblock
10 und das Bügelrohr 5 können auch durch Verzapfen fest
miteinander verbunden werden. Das Bügelrohr 5 durchsetzt den Lamellenblock 10, der aus Stapelblechen aus
Stahl von 2,5 mm Stärke besteht, die mit an den Außendurchmesser des Bügelrohrs 5 und dessen Verlauf durch
den Lamellenblock 10 angepaßten Löchern versehen sind
und versenkt vernietet sind. In den Lamellenblock 10
ist ein Zylinderschloß 11 so eingesetzt, daß es bis
auf die Schlüsselöffnung in den Lamellenblock 10 eingeschlossen ist und radial in Bezug auf das Bügelrohr 5
zu dessen Außenumfang verläuft. Ein Schlüssel 21 ist
in das Zylinderschloß 11 eingeführt.

Das Bügelschloß ist in Figur 4 in geschlossener Stellung
gezeigt. In dieser Stellung ist der Verschlußbügel 1
mittels des Handgriffs 2 gegen die Kraft der Rückholfeder soweit in dem Bügelrohr 5 verschoben, daß das
freie Ende des Verschlußbügels 1 in das Bügelrohr 5 eingeführt ist, wodurch die von diesem Ende und dem zugehörigen Ende des Bügelrohrs 5 bestimmte Schließöffnung des Bügelschlosses abgeschlossen wird. Beim Schließen des Zylinderschlosses 11 mittels des Schlüssels 21 wird das Eingriffselement mit der Rastnut an dem Verschlußbügel 1 in Eingriff gebracht, und beim Öffnen des Zylinderschlosses wird der Verschlußbügel 1 wieder frei.

Die in Figur 5 in Draufsicht dargestellte Stahlplatte 60 besteht aus gehärtetem Stahl. Sie ist kreisbogenförmig ausgebildet und läßt eine Öffnung frei, die für die Anbringung des Bügelschlosses an dem Zweiradfahrzeug groß genug ist; im Ausführungsbeispiel erstreckt sich die Öffnung über einen Winkel von 90°. Auf der Mitte zwischen den Enden der Stahlplatten 60 befindet sich eine Erweiterung 61, die mit einem Durchbruch 62 versehen ist, dessen Durchmesser an den Außendurchmesser des Lamellenblocks 10 angepaßt ist. Eines der Enden der Stahlplatte 60 trägt ein von seiner Fläche hochstehendes Führungselement 63 in Form eines Auges, dessen Durchmesser an den Durchmesser des Verschlußbügels 1 angepaßt ist. Nahe den offenen Enden ist die Stahlplatte 60 mit zwei nach innen gerichteten Vorsprüngen 64 versehen, in die Langlöcher 65 eingearbeitet sind. In die Langlöcher 65 greifen Befestigungselemente ein, mit denen das Bügelschloß an dem jeweiligen Zweiradfahrzeug befestigt wird.

Die Stahlplatte 60 wird zur Anbringung an dem Bügelschloß zunächst mit dem Durchbruch 62 auf den Lamellenblock 10 aufgeschobenen und dann mit diesem und mit dem Bügelrohr 5 verschweißt.

In entsprechender Weise kann die Stahlplatte 60 auch mit den anderen vorstehend beschriebenen Bügelschlössern verbunden werden.

Patentansprüche

1. Bügelschloß für Zweiradfahrzeuge, bestehend aus einem kreisbogenförmigen Verschlußbügel aus gehärtetem Stahl mit einem Handgriff, aus einem kreisbogenförmigen Kanal mit einer Schließöffnung zwischen seinen Enden, in dem der Verschlußbügel gegen die Kraft einer Feder aus einer die Schließöffnung schließenden ersten Stellung in eine die Schließöffnung freigebende zweite Stellung verschiebbar ist, aus einem seitlich von dem Kanal vorstehenden Gehäuse und aus einem in dem Gehäuse angeordneten Schloß mit einem gegen den Verschlußbügel verstellbaren Eingriffselement, das zum Eingriff mit einer komplementär dazu ausgebildeten Rastnut am Umfang des Verschlußbügels eingerichtet ist, wobei in Schließstellung des Schlosses der Verschlußbügel in seiner ersten Stellung und das Eingriffselement im Eingriff mit der Rastnut und in geöffneter Stellung des Schlosses der Verschlußbügel in seiner zweiten Stellung und das Eingriffselement außer Eingriff mit der Rastnut ist,

dadurch gekennzeichnet, daß der Kanal von einem Bügelrohr (5,35) aus gehärtetem Stahl gebildet ist, das das Gehäuse durchsetzt, und daß das Bügelrohr (5,35) innerhalb des Gehäuses einen Durchbruch (13,38,57) aufweist und das Schloß in dem Gehäuse mit dem Eingriffselement in Ausrichtung zu dem Durchbruch (13,38,56) angeordnet ist.

2. Bügelschloß nach Anspruch 1, dadurch gekennzeichnet, daß das Bügelrohr (35) an den offenen Enden mit Führungselementen (36) für den Verschlußbügel (1) versehen ist.

3. Bügelschloß nach Anspruch 1 oder 2, dadurch gekennzeichnet, daß das Schloß ein in das Gehäuse eingeschlossenes Zylinderschloß (11) ist.

4. Bügelschloß nach Anspruch 3, dadurch gekennzeichnet, daß das Zylinderschloß (11) einen Schloßkern (16,51) mit Stift- und Plättchenzuhaltungen enthält.

5. Bügelschloß nach Anspruch 4, dadurch gekennzeichnet, daß der Schloßkern (16) radial in bezug auf das Bügelrohr (5,35) in eine in dem Gehäuse verdrehungssicher angeordnete Schloßhülse (12) eingesetzt ist.

6. Bügelschloß nach Anspruch 5, dadurch gekennzeichnet, daß die Schloßhülse (12) mit ihrem dem Verschlußbügel (1) zugekehrten Ende in den Durchbruch (13,38) in dem Bügelrohr ( 5,35) eingesetzt ist und an diesem Ende eine sich in Richtung auf den Verschlußbügel (1) verengende Öffnung (15) aufweist, daß das Eingriffselement eine zwischen dem Schloßkern (16) und der Öffnung (15) angeordnete Kugel (20) ist, deren Durchmesser größer als der kleinste Durchmesser der Öffnung (15) ist, und daß der Schloßkern (16) an dem der Kugel (20) zugekehrten Ende eine exzentrische, an den Durchmesser der Kugel (20) angepaßte Ausnehmung (19) aufweist.

7. Bügelschloß nach Anspruch 5 oder 6, dadurch gekennzeichnet, daß das Gehäuse einen Lamellenblock (10) bildet.

8. Bügelschloß nach Anspruch 5 oder 6, dadurch gekennzeichnet, daß das Gehäuse einen auf der inneren Umfangsseite des Bügelrohres (35) abgeschlossenen Rohrkörper (40) aus gehärtetem Stahl bildet.

9. Bügelschloß nach Anspruch 8, dadurch gekennzeichnet, daß das Bügelrohr (35) an seiner inneren Umfangsseite mit einem Durchbruch (38) versehen ist, mit dem ein von dem Rohrkörper (40) vorstehenden Zapfen (42) im Eingriff ist.

10. Bügelschloß nach einem der Ansprüche 1 bis 4, dadurch gekennzeichnet, daß der Schloßkern (51) tangential in bezug auf das Bügelrohr (5) in einen das Gehäuse bildenden Lamellenblock (50) verdrehungssicher eingeschlossen ist und daß innerhalb des Lamellenblocks (50) ein in radialer Richtung in bezug auf das Bügelrohr (5) gleitbewegliches Eingriffselement in Form eines Riegels (53) vorgesehen ist, mit dem ein exzentrisch vom Innenende des Schloßkerns (51) vorstehender Zapfen (52) exzentrisch verbunden ist.

11. Bügelschloß nach Anspruch 10, dadurch gekennzeichnet, daß der Riegel (53) unter der Kraft einer Feder (56) in Eingriff mit der Rastnut (57) an dem Verschlußbügel (1) ist.

12. Bügelschloß nach Anspruch 10 oder 11, dadurch gekennzeichnet, daß der Riegel (53) eine rechteckförmige Platte mit einem exzentrischen Durchbruch (54) ist, in den der vom Schloßkern (16) vorstehende Zapfen (52) greift.

13. Bügelschloß nach einem der vorhergehenden Ansprüche, dadurch gekennzeichnet, daß das Bügelrohr (5) unlösbar mit einer Stahlplatte (60) verbunden ist.

14. Bügelschloß nach Anspruch 13, dadurch gekennzeichnet, daß die Stahlplatte (60) mittig zwischen den Enden eine Erweiterung (61) mit einem an den Außendurchmesser des Gehäuses angepaßten Durchbruch (62) aufweist und daß das Gehäuse und die Stahlplatte (60) im Bereich des Durchbruchs (62) unlösbar miteinander verbunden sind.

15. Bügelschloß nach einem der Ansprüche 13 oder 14, dadurch gekennzeichnet, daß die Stahlplatte (60) an dem über das Bügelrohr (5) vorstehenden Ende mit einem von der Fläche der Stahlplatte (60) vorstehenden Führungselement (63) für den Verschlußbügel (1) versehen ist.

16. Bügelschloß nach einem der Ansprüche 13 bis 15, dadurch gekennzeichnet, daß die Stahlplatte (60) nach innen gerichtete Vorsprünge (64) aufweist, die zur Aufnahme von Befestigungselementen zur Befestigung des Bügelschlosses an dem Zweiradfahrzeug eingerichtet sind.

0083798

**Fig. 1a**

**Fig. 1b**

0083798

Fig. 1c

*Fig. 2a*

*Fig. 2b*

*Fig. 2c*

0083798

Fig. 3c

Fig. 3a

Fig. 3b

Fig. 4

Fig. 5

Europäisches Patentamt

**EUROPÄISCHER RECHERCHENBERICHT**

**0083798**
Nummer der Anmeldung

EP 82 11 2047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 519 068 (WINKHAUS) <br><br> * Insgesamt * <br><br> --- | 1-4,8, 10 | E 05 B 71/00 <br> B 62 H 5/14 |
| A | NL-C- 8 874 (LAMBEEK) <br> * Figur 1 * <br><br> --- | 2 | |
| A | GB-A- 113 448 (NÜRNBERGER METALL- & LACKIERWAARENFABRIK) <br> * Figuren 1,2 * <br><br> --- | 5,9 | |
| A | DE-C- 149 129 (RUDOLF) <br> * Figur 1 * <br><br> --- | 5 | |
| A | NL-C- 40 762 (N.V. SLOTENFABRIEK HOPMI) <br><br> --- | | **RECHERCHIERTE SACHGEBIETE (Int. Cl. 3)** |
| A | DE-A-2 739 983 (STENMAN HOLLAND) <br><br> ----- | | E 05 B <br> B 62 H |

Der vorliegende Recherchenbericht wurde für alle Patentansprüche erstellt.

| Recherchenort <br> DEN HAAG | Abschlußdatum der Recherche <br> 05-04-1983 | Prüfer <br> GEMMELL R.I.D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82